(19)

Europäisches
Patentamt
European
Patent Office
Office européen
des brevets

(11)  **EP 4 446 188 B1**

(12)  **EUROPEAN PATENT SPECIFICATION**

(45) Date of publication and mention
of the grant of the patent:
**15.04.2026  Bulletin 2026/16**

(21) Application number: **23866675.4**

(22) Date of filing: **20.07.2023**

(51) International Patent Classification (IPC):
**B60W 30/16** (2020.01)  **B60W 30/14** (2006.01)
**B60W 30/18** (2012.01)  **B60W 40/00** (2006.01)
**B60W 40/105** (2012.01)

(52) Cooperative Patent Classification (CPC):
**B60W 40/105; B60W 30/14; B60W 30/16;
B60W 30/18145; B60W 40/00;** B60W 2552/30;
B60W 2554/802; B60W 2720/10; B60W 2720/106;
B60W 2754/30

(86) International application number:
**PCT/CN2023/108301**

(87) International publication number:
**WO 2024/178900 (06.09.2024 Gazette 2024/36)**

(54)  **CONTROL APPARATUS AND CONTROL METHOD FOR ADAPTIVE CRUISE CONTROL OF VEHICLE**

ADAPTIVE GESCHWINDIGKEITSREGELUNGSVORRICHTUNG UND VERFAHREN FÜR EIN
FAHRZEUG

APPAREIL DE COMMANDE ET PROCÉDÉ DE COMMANDE POUR UNE RÉGULATION DE
VITESSE ADAPTATIVE D'UN VÉHICULE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **02.03.2023  CN 202310190923**

(43) Date of publication of application:
**16.10.2024  Bulletin 2024/42**

(73) Proprietor: **Changzhou Xingyu Automotive
Lighting
Systems Co., Ltd.
Changzhou, Jiangsu 213022 (CN)**

(72) Inventor: **ZHANG, Min
Changzhou, Jiangsu 213022 (CN)**

(74) Representative: **Lorenz Seidler Gossel Part. mbB
Widenmayerstr. 23
80538 München (DE)**

(56) References cited:
EP-A1- 3 865 363   CN-A- 105 172 791
CN-A- 105 667 509   CN-A- 107 891 860
CN-A- 109 229 098   CN-A- 109 484 407
CN-A- 111 873 998   CN-A- 114 394 095
CN-A- 115 848 372   US-A1- 2020 324 765
US-B1- 6 434 471   US-B2- 9 043 115

## Description

## TECHNICAL FIELD

The present disclosure relates to the technical field of adaptive cruise control (ACC), and in particular, to an ACC device and method for a vehicle.

## BACKGROUND

As a driving assistance function, ACC is currently equipped on most vehicles. Existing ACC can generally adjust a time headway for different gears by rotating a button at an end of a cruise handle. For example, the time headway may be set to five gears: 1.26 s, 1.62 s, 1.98 s, 2.34 s, and 2.7 s (which may vary among different vehicle models). The time headway represents a difference between time points at which front ends of front and rear adjacent vehicles pass through a same location, and is generally calculated by dividing a space headway between the front and rear vehicles by a velocity of the rear vehicle. The time headway represents maximum response time that a driver of the rear vehicle has when the front vehicle brakes. Therefore, the time headway does not fluctuate with a change of a vehicle velocity.

The existing ACC has at least the following drawbacks.

(1) After a driver selects a gear of the time headway, a value of the time headway does not change during cruising of a current vehicle. Therefore, when a front vehicle suddenly accelerates/decelerates sharply, a spacing between the current vehicle and the front vehicle increases or decreases because the time headway remains unchanged. If the spacing between the current vehicle and the front vehicle increases, another vehicle may join in between the current vehicle and the front vehicle, affecting the cruising of the current vehicle, and even causing a collision accident. If the spacing between the current vehicle and the front vehicle decreases, there may be a collision accident between the current vehicle and the front vehicle.

(2) An existing ACC system has a relatively single function, and does not provide reasonable response strategies for situations such as cornering, overtaking, and lane changing, resulting in poor user experience. US 9 043 115 B2 describes an adaptive cruise control method for a vehicle.

## SUMMARY

The present disclosure is intended to solve a technical problem that a fixed time headway setting in existing ACC results in a delayed response of a driver in an emergency in a practical application, thereby easily causing queue jumping, a collision, and other situations.

The present disclosure provides an ACC device and method for a vehicle, which can not only improve a response velocity of a vehicle for acceleration and deceleration of a front vehicle, thereby improving traveling safety of the vehicle, but also meet diverse needs of users.

Technical solutions used in the present disclosure to solve the technical problem are as follows. An ACC method for a vehicle is provided, including the following steps:

S1. enabling an ACC function based on an operating signal of a driver, and after the ACC function is enabled, setting, by the driver, a cruising velocity in an ACC mode;

S2. determining, by an ACC module, whether there is another vehicle in front of a current vehicle; and if there is no vehicle in front of the current vehicle, enabling the current vehicle to travel at the cruising velocity set by the driver; or if there is another vehicle, namely a front vehicle in front of the current vehicle, enabling, by the ACC module, a variable time gap calculation model to calculate a time headway $t_h$ between the current vehicle and the front vehicle in real time, and adjusting, by the ACC module, the cruising velocity of the current vehicle based on the time headway $t_h$ calculated in real time,

where the variable time gap calculation model is as follows: $t_h = t_0 - C_v \times V_{rel} - C_\partial \times \alpha_p - C_j \times Jerk_p$, where $t_h$ represents the time headway calculated in real time, $t_0$ represents an initial time headway, $C_v$, $C_\partial$, and $C_j$ each represent a coefficient greater than 0, $V_{rel}$ represents a current relative velocity between the current vehicle and the front vehicle, $\alpha_p$ represents an acceleration of the front vehicle, and $Jerk_p$ represents a change rate of an acceleration of the current vehicle; when the current vehicle is accelerating or decelerating, the ACC module dynamically adjusts a value of the coefficient $C_j$ of the change rate of the acceleration of the current vehicle; and

S3. when the current vehicle is cornering in the ACC mode, adjusting, by the ACC module, the cruising velocity of the current vehicle based on a cornering strategy,

where the cornering strategy includes:

setting, by the ACC module, a maximum curvature radius $R_{max}$ for the cornering of the current vehicle;

outputting, by the ACC module, a acceleration $a_w$ of the vehicle while driving a curve of the current vehicle through linear interpolation based on a relative distance and a relative velocity between the current vehicle and the front vehicle, and a curvature radius of the trajectory of the current vehicle;

after the current vehicle enters a bend, calculating, by the ACC module, a traveling distance L and an average acceleration $a_{avg}$ of the current vehicle within M sampling cycles;

if the curvature radius of the trajectory of the current vehicle is less than the maximum curvature radius $R_{max}$, determining whether there is another vehicle in front of the current vehicle; and if there is no vehicle ahead, controlling, by the ACC module, the current vehicle to travel the traveling distance L based on the acceleration $a_{avg}$; and

after the travel, if the ACC module recognizes presence of another vehicle ahead, controlling, by the ACC module, the current vehicle to follow the another vehicle ahead to complete the cornering based on the acceleration $a_w$; if no vehicle appears in front of the current vehicle, controlling, by the ACC module, the current vehicle to complete the cornering at a maximum cruising velocity set in a case of no front vehicle during the cornering;

where a calculation formula for the traveling distance L is as follows: $L = \dfrac{\omega_{yaw} \times T}{R}$ , where $\omega_{yaw}$ represents a yaw velocity of the current vehicle, R represents the curvature radius of the vehicle, and T represents time within the M sampling cycles; and a calculation formula for the average value $a_{avg}$ is as follows:

$$a_{avg} = \sum_{m=1}^{M} a_m \ \text{x} \ 1/M$$ , where $a_m$ represents an acceleration within an $m^{th}$ sampling cycle, m represents a sample cycle sequence, and m=1, 2, ..., M.

Therefore, the variable time gap calculation model can be utilized to calculate the time headway in real time, know a change of the time headway in time, and further allow a prompt response to acceleration and deceleration of the front vehicle, thereby greatly shortening response time of the driver. This improves road utilization and reduce an occurrence rate of a traffic accident. The cornering strategy is introduced to assist a vehicle more reasonably and safely in passing through a bend, such that an ACC system has richer functions, becomes applicable to a plurality of application scenarios, and can meet diverse needs of users.

Further, the accelerationof the front vehicle is calculated according to a following formula: $\alpha_p = \dfrac{V_{ego} + V_{rel}}{\Delta t}$ , where $V_{ego}$ represents a current cruising velocity of the current vehicle, $\Delta t$ represents a time difference between a previous time point and a current time point; and the change rate of the acceleration of the current vehicle is calculated according to a following formula: $Jerk_p = \dfrac{da}{dt}$ , where $a$ represents the acceleration of the current vehicle, and $t$ represents time.

Further, in the step S2, the adjusting, by the ACC module, the cruising velocity of the current vehicle based on the time headway $t_h$ calculated in real time specifically includes:

setting, by the ACC module, a maximum time headway threshold $t_{h\text{-}max}$ and a minimum time headway threshold $t_{h\text{-}min}$ for the current vehicle; calculating, by the variable time gap calculation model, a time headway $t_{h\text{-}i}$ at a current time point, and comparing the time headway $t_{h\text{-}i}$ with the maximum time headway threshold $t_{h\text{-}max}$ and the minimum time headway threshold $t_{h\text{-}min}$, where if $t_{h\text{-}i} > t_{h\text{-}max}$, the ACC module adjusts a current time headway of the current vehicle to the $t_{h\text{-}max}$; if $t_{h\text{-}i} < t_{h\text{-}min}$, the ACC module adjusts the current time headway of the current vehicle to the $t_{h\text{-}min}$; or if $t_{h\text{-}i} \in [t_{h\text{-}min}, t_{h\text{-}max}]$, the ACC module adjusts the current time headway of the current vehicle to the $t_{h\text{-}i}$; and adjusting, by the ACC module, a velocity of the current vehicle based on the current $t_{h\text{-}max}$, $t_{h\text{-}min}$, or $t_{h\text{-}i}$ of the current vehicle.

Further, when the ACC module finds that a value of the acceleration $\alpha_p$ of the front vehicle increases and is positive, it indicates that the front vehicle has an acceleration trend, the time headway $t_{h\text{-}i}$ calculated in real time by the variable time gap calculation model $t_h = t_0 - C_v \times V_{rel} - C_\partial \times \alpha_p - C_j \times Jerk_p$ is less than a time headway $t_{h\text{-}(i\text{-}1)}$ at a previous time point, and the ACC module increases the cruising velocity of the current vehicle to maintain a set spacing between the current vehicle and the front vehicle; and when the ACC module finds that the value of the acceleration $\alpha_p$ of the front vehicle increases and is negative, it indicates that the front vehicle has a deceleration trend, the time headway $t_{h\text{-}i}$ calculated in real time by the variable time gap calculation model $t_h = t_0 - C_v \times V_{rel} - C_\partial \times \alpha_p - C_j \times Jerk_p$ is greater than the time headway $t_{h\text{-}(i\text{-}1)}$ at the previous time point, and the ACC module decreases the cruising velocity of the current vehicle to maintain the set spacing between the current vehicle and the front vehicle.

Further, the ACC method also includes: when the current vehicle is overtaking in the ACC mode, assisting, by the ACC module, the current vehicle in completing the overtaking based on an overtaking assistance strategy, where the overtaking assistance strategy includes:

when the ACC module detects that there is the front vehicle in front of the current vehicle and a velocity of the front vehicle is lower than the cruising velocity of the current vehicle, recognizing, by the ACC module, whether there is a sensor signal;

if there is the sensor signal, determining whether information from another vehicle on an adjacent lane is detected based on the sensor signal; and if the another vehicle is not detected or if the another vehicle is detected but located outside a safe lane changing distance, displaying, by the ACC module, a lane changing instruction through an instrument panel to remind the driver; or if the another vehicle is detected and located within the safe lane changing distance, reminding, by the ACC module, the driver that a lane changing requirement is not met; and switching, by the driver, a turn signal lever after seeing the lane changing instruction, such that the ACC module first controls the current vehicle to accelerate forward, and then the driver performs a lane changing operation; and if the driver does not perform the lane changing operation within a time Y after the switching of the turn signal lever, disabling, by the ACC module, overtaking assistance, and controlling the current vehicle to maintain a safe distance from the front vehicle.

The present disclosure further provides an ACC device for a vehicle, where the ACC device adopts the ACC method for the vehicle described above, and includes:

a state machine configured to control enabling/disabling of an ACC function and receive an operating signal of a driver;
a vehicle dynamics calculation module configured to calculate a dynamics parameter of the vehicle;
a perception module configured to perceive the dynamics parameter of the vehicle and road environment information; and
an ACC module including a longitudinal acceleration control unit and a vehicle control unit, where the longitudinal acceleration control unit is configured to calculate a time headway $t_h$ between a current vehicle and a front vehicle, and information of an acceleration of the vehicle in real time based on a variable time gap calculation model; and the vehicle control unit is configured to control the current vehicle to perform cruising, following, and cornering operations based on the information of the accelerated velocity.

The present disclosure has the following advantages. The ACC device and method for a vehicle in the present disclosure utilizes a variable time gap calculation model to calculate a time headway in real time, knows a change of the time headway in time, and further allows a prompt response to acceleration and deceleration of a front vehicle, thereby greatly shortening response time of a driver. This improves road utilization and reduces an occurrence rate of a traffic accident. A cornering strategy and an overtaking assistance strategy are introduced to assist a vehicle more reasonably and safely in passing through a bend, lane changing, or overtaking, such that an ACC system has richer functions, becomes applicable to a plurality of application scenarios, and can meet diverse needs of users. The method introduces the variable time gap calculation model. In a following mode, this model can improve accuracy of a current vehicle following the front vehicle, allow a response in advance to a velocity change of the front vehicle, shorten the response time of the driver, improve road traffic efficiency, and reduce accidents. In addition, driving stability of the current vehicle can be improved accordingly, thereby making a passenger feel more comfortable.

## BRIEF DESCRIPTION OF THE DRAWINGS

The present disclosure will be further described below in conjunction with the accompanying drawings and embodiments.

FIG. 1 is a flowchart of an ACC method for a vehicle according to the present disclosure.
FIG. 2 is a flowchart of adjusting a vehicle velocity based on a time headway of a variable time gap calculation model according to the present disclosure.
FIG. 3 is a flowchart of a cornering strategy according to the present disclosure.
FIG. 4 is a flowchart of an overtaking assistance strategy according to the present disclosure.
FIG. 5 is a curve chart showing a decelerated velocity as a function of a velocity according to the present disclosure.
FIG. 6 is a curve chart showing an acceleration as a function of a velocity according to the present disclosure.
FIG. 7 is a curve chart showing a change rate of a decelerated velocity as a function of a velocity according to the present disclosure.
FIG. 8 is a schematic structural diagram of an ACC device for a vehicle according to the present disclosure.

In the drawings, 1: state machine; 2: vehicle dynamics calculation unit; 3: perception module; 4: ACC module; 41: longitudinal acceleration control unit; 42: vehicle control unit.

## DETAILED DESCRIPTION OF THE EMBODIMENTS

The present disclosure will be described in further detail below in combination with accompanying drawings. These accompanying drawings are all simplified schematic diagrams, which merely illustrate the basic structure of the present disclosure in a schematic manner, and thus only show the parts associated with the present disclosure.

In the description of the present disclosure, the terms "central", "longitudinal", "transverse", "long", "wide", "thick", "upper", "lower", "front", "rear", "left", "right", "vertical", "horizontal", "top", "bottom", "inner", "outer", "clockwise", "anticlockwise", "axial", "radial" and "circumferential" etc. are used to indicate orientations or position relations shown in the accompanying drawings. It should be noted that these terms are used herein for ease and simplification of description of the present disclosure rather than indicating or implying that the stated device or element must have a specific orientation or must be constructed and operated in a specific orientation, and thus cannot be construed as limitations to the present disclosure. In addition, features defined with "first" and "second" may explicitly or implicitly include one or more of the features. In the description of the present disclosure, unless otherwise specified, "a plurality of" means two or more.

In the description of the present disclosure, it should be noted that, unless otherwise clearly specified, meanings of terms "mount", "connected with", and "connected to" should be understood in a board sense. For example, the connection may be a fixed connection, a removable connection, or an integral connection; may be a mechanical connection or an electrical connection; may be a direct connection or an indirect connection by using an intermediate medium; or may be intercommunication between two elements. Those of ordinary skill in the art may understand specific meanings of the foregoing terms in the present disclosure based on a specific situation.

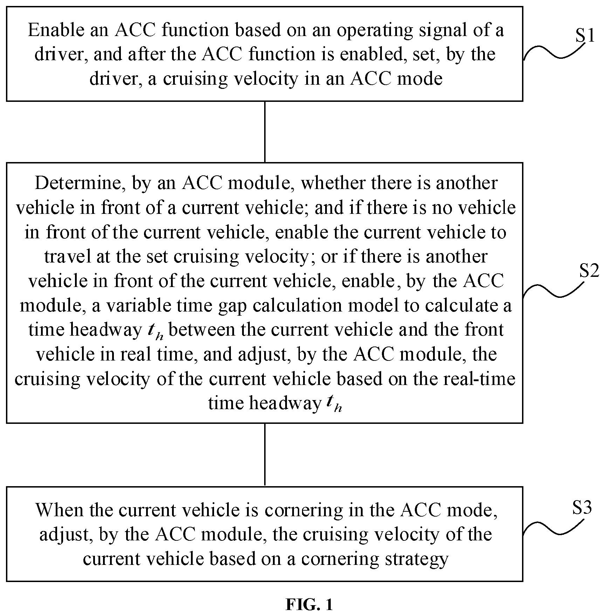

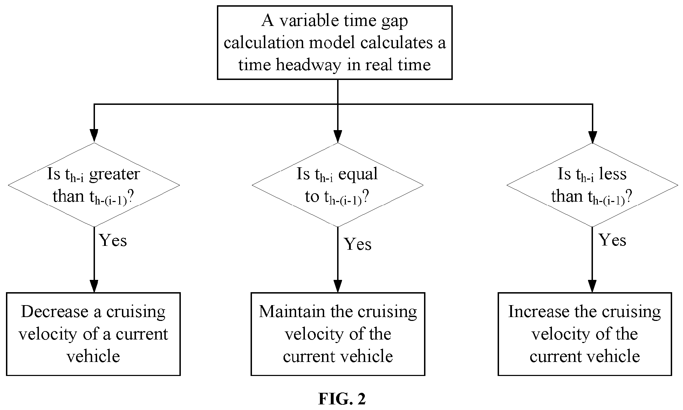

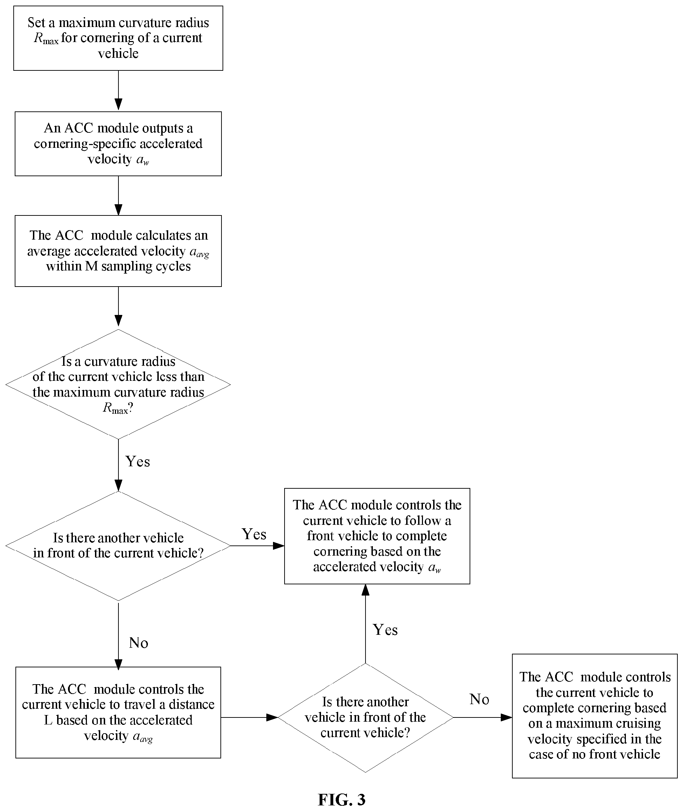

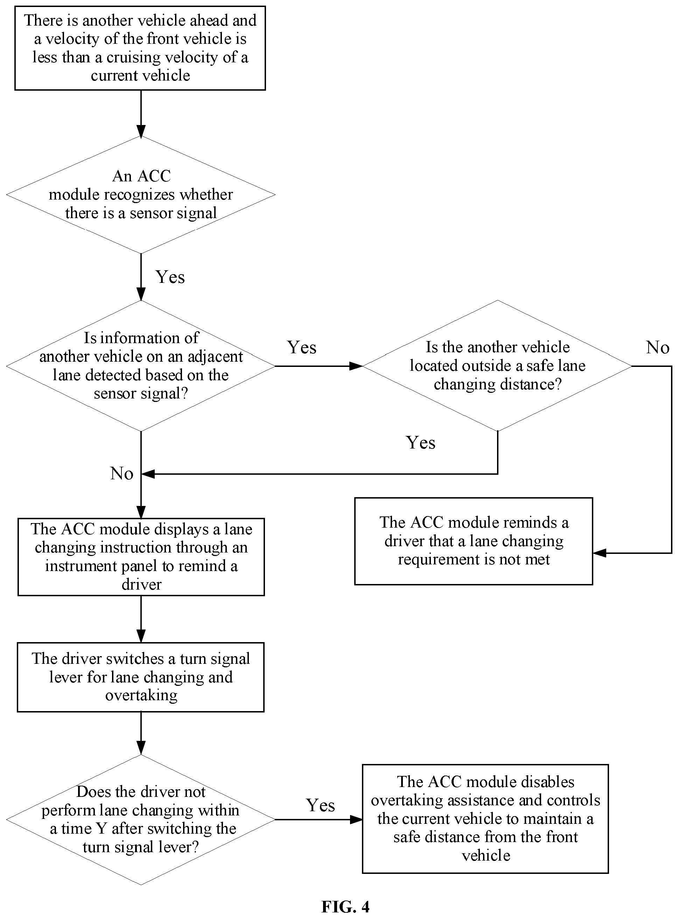

As shown in FIG. 1 to FIG. 4, an ACC method for a vehicle according to the present disclosure includes the following steps.

S1. An ACC function is enabled based on an operating signal of a driver, and after the ACC function is enabled, the driver sets a cruising velocity in an ACC mode.

S2. An ACC module determines whether there is another vehicle in front of a current vehicle. If there is no vehicle in front of the current vehicle, the current vehicle travels at the set cruising velocity set by the driver. If there is another vehicle in front of the current vehicle, the ACC module enables a variable time gap calculation model to calculate a time headway $t_h$ between the current vehicle and the front vehicle in real time, and adjusts the cruising velocity of the current vehicle based on the real-time time headway $t_h$.

S3. When the current vehicle is cornering in the ACC mode, the ACC module adjusts the cruising velocity of the current vehicle based on a cornering strategy.

It should be noted that when an ACC function of a vehicle is activated, a driver can set a cruising velocity V, for example, 50 km/h, and can select an initial time headway $t_0$. The initial time headway $t_0$ is a value corresponding to a time headway gear of the vehicle. Then, the vehicle can travel based on the set cruising velocity and initial time headway. When there is no vehicle in front of the current vehicle, the current vehicle can travel at a uniform velocity based on the set cruising velocity. When there is another vehicle in front of the vehicle, the driver can set a vehicle following a distance $D_{set}$ (namely, a distance between the two vehicles), where $D_{set} = t_0 \times V$. According to this formula, the current vehicle can increase or decrease the cruising velocity to maintain a set vehicle spacing.

When the current vehicle starts a following mode, the ACC module of the current vehicle enables the variable time gap calculation model to calculate the time headway $t_h$ between the current vehicle and the front vehicle in real time. The time headway $t_h$ herein is a real-time time headway that varies based on the initial time headway $t_0$. When the front vehicle suddenly accelerates/decelerates sharply, if the cruising velocity of the current vehicle remains unchanged, a spacing between the current vehicle and the front vehicle suddenly increases/decreases. This method introduces the variable time gap calculation model, which can know a change of the time headway in real time, and thus can monitor a velocity change trend of the front vehicle in real time. The variable time gap calculation model is as follows: $t_h = t_0 - C_v \times V_{rel} - C_\partial \times \alpha_p - C_j \times$ Jerk, , where $t_h$ represents the real-time time headway, $t_0$ represents the initial time headway, $C_v$, $C_\partial$, and $C_j$ each represent a coefficient greater than 0, $V_{rel}$ represents a relative velocity between the current vehicle and the front vehicle, $\alpha_p$ represents an acceleration of the front vehicle, and $Jerk_p$ represents a change rate of an acceleration of the current vehicle. The variable time gap calculation model in the present disclosure associates the time headway $t_h$ with a velocity change rate (namely, the $\alpha_p$) of the front vehicle, the change rate of the acceleration of the current vehicle (namely, the $Jerk_p$), and the relative velocity between the two vehicles (namely, the $V_{rel}$), which can more accurately reflect a change trend of the time headway $t_h$. Moreover, the change rate $Jerk_p$ of the acceleration of the current vehicle can reflect a velocity change during acceleration/deceleration of the current vehicle. The coefficient $C_j$ can limit the change rate $Jerk_p$ of the acceleration to prevent a passenger from feeling uncomfortable due to sharp acceleration/deceleration of the current vehicle. For example, value ranges of the coefficients $C_v$, $C_\partial$, and $C_j$ are as follows: $0.05 \leq C_v \leq 0.8$, $0 < C_\partial \leq 1$, and $0 < C_j \leq 0.1$. The coefficient $C_v$ is used to adjust the vehicle spacing. The coefficient $C_\partial$ is used to assist in analyzing a trend of the acceleration of the front vehicle, and a larger value of the $C_\partial$ means that the current vehicle is more sensitive to an acceleration trend of the front vehicle. The coefficient $C_j$ is used to adjust a comfort level for a change of the acceleration of the current vehicle.

It should be noted that the current vehicle can use a sensor (such as a camera, a radar, or an ultrasonic sensor) to collect sensing data (such as a video image and distance data). Based on the collected data, the current vehicle can calculate a relative distance and the relative velocity between the front vehicle and the current vehicle. In a vehicle following process, the relative velocity between the front vehicle and the current vehicle can be monitored in real time, and is processed to calculate a real-time acceleration of the front vehicle. In this embodiment, the acceleration of the front vehicle is calculated according to a following formula:

$$\alpha_p = \frac{V_{ego} + V_{rel}}{\Delta t},$$

where $V_{ego}$ represents a current cruising velocity of the current vehicle, $\Delta t$ represents a time difference between a previous time point and a current time point; and the change rate of the acceleration of the current vehicle is calculated according to a following formula:

$$Jerk_p = \frac{da}{dt},$$

where $a$ represents the acceleration of the current vehicle, and $t$ represents time. In other words, after receiving the relative velocity between the current vehicle and the front vehicle and a velocity of the current vehicle, the ACC module can calculate the acceleration $\alpha_p$ (namely, the velocity change rate) of the front vehicle. The ACC module receives the acceleration $a$ of the current vehicle, and takes a derivative of the acceleration $a$ to obtain the change rate $Jerk_p$ of the accelerated velocity. A movement trend of the front vehicle can be known in time by monitoring the velocity change rate of the front vehicle, such that the current vehicle can respond in advance to a velocity change of the front vehicle. Whether the acceleration of the current vehicle changes too fast can be monitored in real time by monitoring the change rate of the acceleration of the current vehicle. If the acceleration changes too fast, too sharp acceleration/deceleration is caused to the current vehicle, causing the passenger to feel uncomfortable. The method introduces the variable time gap calculation model. In a following mode, this can improve accuracy of the current vehicle following the front vehicle, respond in advance to the velocity change of the front vehicle, shorten response time of the driver, improve road traffic efficiency, and reduce accidents. In addition, driving stability of the current vehicle can be improved, thereby making the passenger feel more comfortable.

In the step S2, the adjusting, by the ACC module, the cruising velocity of the current vehicle based on the real-time time headway $t_h$ specifically includes: setting, by the ACC module, a maximum time headway threshold $t_{h\text{-max}}$ and a minimum time headway threshold $t_{h\text{-min}}$ for the current vehicle; calculating, by the variable time gap calculation model, a time headway $t_{h\text{-}i}$ at a current time point, and comparing the time headway $t_{h\text{-}i}$ with the maximum time headway threshold $t_{h\text{-max}}$ and the minimum time headway threshold $t_{h\text{-min}}$, where if $t_{h\text{-}i} > t_{h\text{-max}}$, the ACC module adjusts a current time headway of the current vehicle to the $t_{h\text{-max}}$; if $t_{h\text{-}i} < t_{h\text{-min}}$, the ACC module adjusts a current time headway of the current vehicle to the $t_{h\text{-min}}$; or if $t_{h\text{-}i} \in [t_{h\text{-min}}, t_{h\text{-max}}]$, the ACC module adjusts the current time headway of the current vehicle to the $t_{h\text{-}i}$; and adjusting, by the ACC module, the velocity of the current vehicle based on the currently set $t_{h\text{-max}}$, $t_{h\text{-min}}$, or $t_{h\text{-}i}$ of the current vehicle. In other words, the present disclosure imposes a segment limitation on the real-time time headway $t_h$ output by the variable time gap calculation model. When the calculated time headway $t_h$ exceeds the maximum time headway threshold $t_{h\text{-max}}$, the ACC module selects the maximum time headway threshold $t_{h\text{-max}}$ as the current time headway. When the calculated time headway $t_h$ is less than the minimum time headway threshold $t_{h\text{-min}}$, the ACC module selects the minimum headway time threshold $t_{h\text{-min}}$ as the current time headway. In this way, the real-time calculated time headway $t_h$ can be kept within a dynamic range to prevent a decrease in road traveling efficiency due to an excessive time headway $t_h$, and to prevent a traffic accident caused by a too small time headway $t_h$.

When the ACC module finds that a value of the acceleration $\alpha_p$ of the front vehicle increases and is positive, it indicates that the front vehicle has the acceleration trend. The real-time time headway $t_{h\text{-}i}$ calculated by the variable time gap calculation model $t_h = t_0 - C_v \times V_{rel} - C_\partial \times \alpha_p - C_j \times Jerk_p$ is less than a time headway $t_{h\text{-}(i\text{-}1)}$ at a previous time point, and the ACC module increases the cruising velocity of the current vehicle to maintain a set spacing between the current vehicle and the front vehicle. That is, if the current vehicle suddenly accelerates at a time point $t_i$, a time headway $t_h$ that is at the time point $t_i$ and calculated based on the variable time gap calculation model is less than a time headway $t_h$ calculated distance at a previous time point $t_{i\text{-}1}$. In other words, there is a trend of decreasing the time headway $t_h$ at the time point $t_i$. In this case, according to a formula $D_{set} = t_h \downarrow \times V$, the ACC module should increase the velocity V of the current vehicle in time to maintain the set spacing between the current vehicle and the front vehicle. If a fixed time headway strategy is adopted, the driver responds to accelerate only when finding that the spacing between the current vehicle and the front vehicle has increased. However, the present disclosure adopts the variable time gap calculation model to calculate a change of the time headway in real time, and controls the current vehicle to accelerate while finding that the front vehicle has the acceleration trend. This greatly reduces the response time of the driver, improves vehicle following accuracy, and prevents other vehicles from jumping a queue due to an increased vehicle spacing.

When the ACC module finds that the value of the acceleration $\alpha_p$ of the front vehicle increases and is negative, it indicates that the front vehicle has a deceleration trend. If the real-time time headway $t_{h\text{-}i}$ calculated by the variable time gap calculation model $t_h = t_0 - C_v \times V_{rel} - C_\partial \times \alpha_p - C_j \times Jerk_p$ is greater than the time headway $t_{h\text{-}(i\text{-}1)}$ at the previous time point, the ACC module decreases the cruising velocity of the current vehicle to maintain the set spacing between the current vehicle and the front vehicle. That is, if the current vehicle suddenly decelerates, the time headway $t_h$ that is at the time point $t_i$ and calculated by the variable time gap calculation model is greater than the time headway $t_h$ calculated at the previous time point $t_{i-1}$. In other words, there is a trend of increasing the time headway $t_h$ at the time point $t_i$. In this case, according to a formula $D_{set} = t_h \uparrow \times V$, the ACC module should decrease the velocity V of the current vehicle in time to maintain the set spacing between the current vehicle and the front vehicle. If the fixed time headway strategy is adopted, the driver responds to decelerate only when finding that the spacing between the current vehicle and the front vehicle has decreased. However, the present disclosure adopts the variable time gap calculation model to calculate the change of the time headway in real time, and controls the current vehicle to decelerate while finding that the front vehicle has the deceleration trend. This greatly reduces the response time of the driver and prevents a collision with the front vehicle due to an overdue response of the current vehicle.

It should be noted that when the current vehicle is accelerating or decelerating, the ACC module dynamically adjusts a value of the coefficient $C_j$ of the change rate of the acceleration of the current vehicle. A value range of the coefficient $C_j$ is from 0 to 0.1 (excluding 0). Assuming that the change rate $Jerk_p$ of the acceleration of the current vehicle is 3 m/s$^3$, the passenger may feel that the acceleration is too fast. In this case, assuming the coefficient $C_j$ is set to 0.05, the change rate $Jerk_p$ of the acceleration can be limited to 1.5 m/s$^3$ to prevent the current vehicle from accelerating too fast. Compared with the prior art, the variable time gap calculation model of the present disclosure does not simply associate the time headway with the relative velocity, but introduces two parameters: the velocity change rate of the front vehicle and the change rate of the acceleration of the current vehicle. In this way, the variable time gap calculation model can calculate a more accurate and reasonable time gap, thereby maintaining a more reasonable spacing between the current vehicle and the front vehicle.

In the ACC mode, the current vehicle may need to pass through a bend. The cornering strategy of the present disclosure includes: setting, by the ACC module, a maximum curvature radius $R_{max}$ for cornering of the current vehicle; outputting, by the ACC module, a acceleration $a_w$ of the vehicle while driving a curve of the current vehicle through linear interpolation based on the relative distance and the relative velocity between the current vehicle and the front vehicle, and a curvature radius of the trajectory of the current vehicle; after the current vehicle enters the bend, calculating, by the ACC module, a traveling distance L and an average acceleration $a_{avg}$ of the current vehicle within M sampling cycles; if the curvature radius of the trajectory of the current vehicle is less than the maximum curvature radius $R_{max}$, determining whether there is another vehicle in front of the current vehicle; and if there is no vehicle ahead, controlling, by the ACC module, the current vehicle to travel the traveling distance L based on the acceleration $a_{avg}$; and after the travel, if the ACC module recognizes presence of another vehicle ahead, controlling, by the ACC module, the current vehicle to follow the another vehicle ahead to complete the cornering based on the acceleration $a_w$; and if no vehicle appears in front of the current vehicle, controlling, by the ACC module, the current vehicle to complete the cornering at a maximum cruising velocity set in a case of no front vehicle during the cornering.

It should be noted that a calculation formula for the traveling distance L is as follows:
$$L = \frac{\omega_{yaw} \times T}{R},$$
where $\omega_{yaw}$ represents a yaw velocity of the current vehicle, R represents the curvature radius of the vehicle, and T represents time within the M sampling cycles; and a calculation formula for the average value $a_{avg}$ is as follows:
$$a_{avg} = \sum_{m=1}^{M} a_m,$$
where $a_m$ represents an acceleration within an m$^{th}$ sampling cycle, m represents a sample cycle sequence, and m=1, 2, ..., M.

In other words, the cornering strategy of the present disclosure does not simply complete the cornering based on the acceleration $a_w$ calculated by the ACC module based on the relative distance, the relative velocity, and the curvature radius of the trajectory of the current vehicle, but is a determining process. After the current vehicle enters the bend, the ACC module calculates the traveling distance L of the current vehicle in real time within the M sampling cycles (for example, 8 to 12 sampling cycles, with each sampling cycle set to 20 ms to 60 ms, which may be set for different vehicle models based on an actual situation). If the current vehicle immediately finds, after entering the bend, that the front vehicle disappears and a sensor of the current vehicle is not faulty, the ACC module controls the current vehicle to first travel the traveling distance L at the acceleration $a_{avg}$, to ensure that the disappearance of the front vehicle is not caused by obstruction of the sensor by objects such as leaves and mud. If the current vehicle is directly enabled to travel according to a strategy of no target ahead, a traffic accident may occur. If the sensor recognizes the front vehicle again after traveling the traveling distance L, the ACC module controls the current vehicle to follow the front vehicle to complete the cornering at the acceleration $a_w$. If the sensor still does not recognize the front vehicle again after traveling the traveling distance L, the ACC module controls the current vehicle to complete the cornering at the set maximum cruising velocity. The cornering strategy of the present disclosure considers an unexpected situation that may occur during the cornering. For example, the current vehicle follows the front vehicle to go straight, and at an intersection, the current vehicle needs to turn, but the front vehicle continues to go straight. In this case, the sensor of the current vehicle recognizes that the front vehicle has disappeared, and there is no target vehicle in front of the current vehicle. However, if there is a tree on a road or construction is underway, leaves, plastic strips, or other objects may be blown by wind to block the sensor of the current vehicle. As a result, the sensor also recognizes the disappearance of the front vehicle (this recognition result is inaccurate). If the current vehicle travels based on a situation in which there is no target vehicle ahead, a collision occurs. Therefore, the cornering strategy of the present disclosure fully considers an actual scenario and adopts a staged cornering method. Firstly, the current vehicle travels a certain distance at a safe velocity. If the current vehicle still finds that there is no target vehicle ahead after traveling the certain distance, the current vehicle increases its velocity for traveling. If there is no vehicle ahead but the current vehicle continues to travel at the safe velocity, a road congestion is also caused due to a too low velocity. Therefore, the cornering strategy adopted in the present disclosure not only can improve traveling efficiency of a vehicle on the road, but also can ensure traveling safety and reduce an occurrence rate of a traffic accident.

The ACC method further includes: when the current vehicle is overtaking in the ACC mode, assisting, by the ACC module, the current vehicle in completing the overtaking based on an overtaking assistance strategy. The overtaking assistance strategy includes: when the ACC module detects that there is the front vehicle in front of the current vehicle and a velocity of the front vehicle is lower than the cruising velocity of the current vehicle, recognizing, by the ACC module, whether there is a sensor signal; if there is the sensor signal, determining whether information from another vehicle in an adjacent lane is detected based on the sensor signal; and if the another vehicle is not detected or if the another vehicle is detected but located outside a safe lane changing distance, displaying, by the ACC module, a lane changing instruction through an instrument panel to remind the driver; or if the another vehicle is detected and located within a safe lane changing distance, reminding, by the ACC module, the driver that a lane changing requirement is not met; and switching, by the driver, a turn signal lever after seeing the lane changing instruction, such that the ACC module first controls the current vehicle to accelerate forward, and then the driver performs a lane changing operation; and if the driver does not perform lane changing within a time Y (which may be, for example, 20 ms to 80 ms) after switching the turn signal lever, disabling, by the ACC module, overtaking assistance, and controlling the current vehicle to maintain a safe distance from the front vehicle; or if the current vehicle is not equipped with the sensor, after the driver switches a turn signal lever, first controlling, by the ACC module, the current vehicle to accelerate forward, and then assisting the driver in the lane changing and the overtaking.

It should be noted that an existing ACC system does not have an overtaking assistance function. When a driver wants to overtake, the ACC module controls a vehicle to accelerate and overtake directly. As a result, the overtaking depends entirely on the driver's own judgment, which decreases overtaking and lane changing safety.

The present disclosure provides an overtaking and lane changing assistance strategy. When the velocity of the front vehicle is too low and the current vehicle wants to overtake, the ACC module first recognizes whether there is a sensor signal (such as a sensor signal sent by an angular radar that can recognize whether there are other vehicles on lanes on both sides of the current vehicle). If the sensor detects that there are no vehicles on the lanes adjacent to the current vehicle, the ACC module can issue the lane changing instruction to remind the driver to perform the lane changing safely. If the sensor detects that there are other vehicles on the lanes adjacent to the current vehicle, but the other vehicles are far away from the current vehicle and will not affect the lane changing and the overtaking, the ACC module can also issue the lane changing instruction to remind the driver to perform the lane changing safely. After seeing the lane changing instruction, the driver can turn on a turn signal for the lane changing and the overtaking. If the driver has turned on the turn signal for a period of time but the current vehicle does not perform the lane changing and the overtaking, the ACC module disables the overtaking assistance and controls the current vehicle to maintain the safe distance from the front vehicle. If the sensor detects that there are other vehicles on the lanes adjacent to the current vehicle, and the other vehicles are close to the current vehicle, the ACC module reminds the driver that the lane changing requirement is not met. If the current vehicle is not equipped with the sensor, after the driver switches the turn signal lever, the ACC module first enables the current vehicle to accelerate forward and then assists the driver in the lane changing and the overtaking. The overtaking and lane changing safety is determined by the driver.

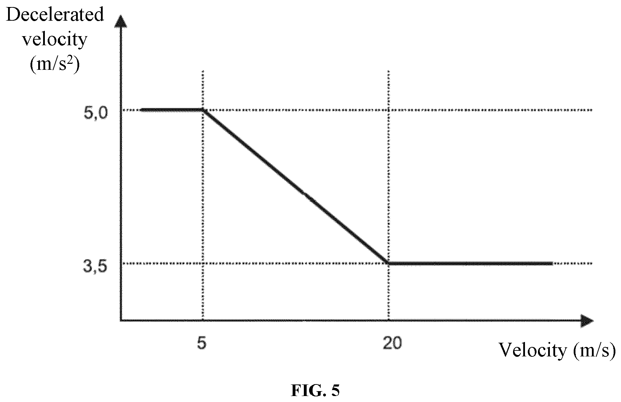

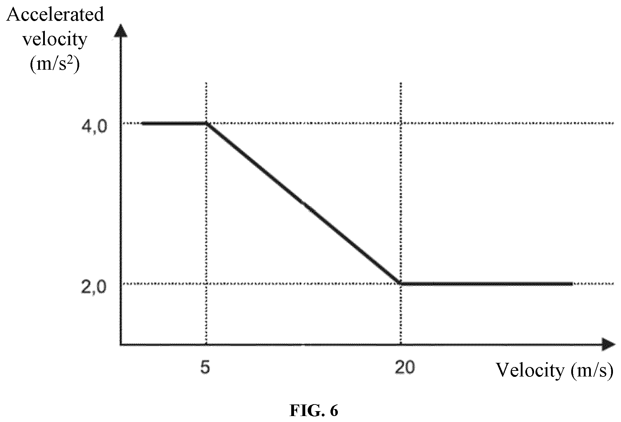

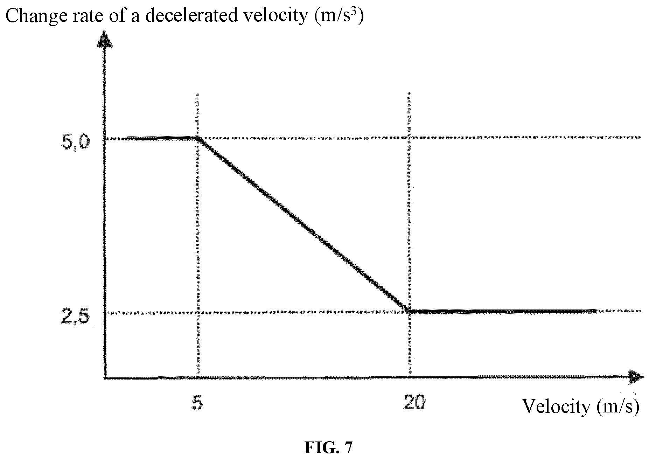

It should be noted that the present disclosure further limits an accelerated velocity, a decelerated velocity, and a change rate of the decelerated velocity deceleration change rate of a vehicle. As shown in FIG. 5, when a vehicle velocity exceeds 20 m/s (namely 72 km/h) and lasts for at least 2 s, an automatic decelerated velocity is set to not exceed 3.5 $m/s^2$. When the vehicle velocity is lower than 5 m/s (namely, 18 km/h) and lasts for at least 2 s, an average automatic decelerated velocity is set to not exceed 5 $m/s^2$. As shown in FIG. 6, when the vehicle velocity exceeds 20 m/s (namely 72 km/h) and lasts for at least 2 s, an automatic acceleration is set to not exceed 2 $m/s^2$. When the vehicle velocity is lower than 5 m/s (namely, 18 km/h) and lasts for at least 2 s, an average automatic acceleration is set to not exceed 4 $m/s^2$. As shown in FIG. 7, when the vehicle velocity exceeds 20 m/s and lasts for at least 1 s, a change rate of the automatic decelerated velocity is set to not exceed 2.5 m/s². When the vehicle velocity is lower than 5 m/s and lasts for at least 1 s, a change rate of the average automatic decelerated velocity is set to not exceed 5 m/s³.

Different accelerated and decelerated velocities can be set for different driving modes of the vehicle. For example, in an economic mode, when the vehicle is accelerating or decelerating, in the case of a low accelerated velocity, the vehicle decelerates through coasting below a safe distance to save energy. Appropriate accelerated and decelerated velocities can be set through calibration. In a standard mode, standard accelerated and decelerated velocities can be used in the ACC mode. In a movement mode, accelerated and decelerated velocities higher than the standard accelerated and decelerated velocities can be used in the ACC mode, for example, are set to 1.05 to 1.35 times the standard accelerated and decelerated velocities.

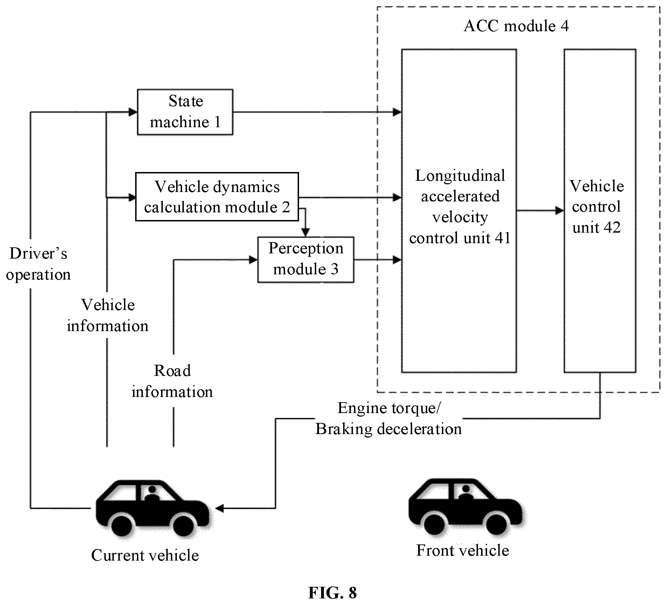

As shown in FIG. 8, the present disclosure further provides an ACC device for a vehicle, where the ACC device adopts the ACC method for a vehicle. The ACC device includes: a state machine 1 configured to control enabling/disabling of an ACC function and receive an operating signal of a driver; a vehicle dynamics calculation module 2 configured to calculate a dynamics parameter of a vehicle; a perception module 3 configured to perceive the dynamics parameter of the vehicle and road environment information; and an ACC module 4 including a longitudinal acceleration control unit 41 and a vehicle control unit 42, where the longitudinal acceleration control unit 41 is configured to calculate a time headway $t_h$ between a current vehicle and a front vehicle, and information of an acceleration of the vehicle in real time based on a variable time gap calculation model; and the vehicle control unit 42 is configured to control the current vehicle to perform cruising, following, and cornering operations based on the calculated information of the accelerated velocity. It can be understood that the state machine 1 can control state switching of the ACC function, including enabled, disabled, idle, faulty, and other states of the ACC function. The driver sets operating signals of the driver such an ACC enabling/-disabling signal and a vehicle start signal, which are sent to the state machine 1. The vehicle dynamics calculation module 2 can calculate a yaw angle of the vehicle, a velocity of the current vehicle, and other parameters. The perception module 3 can receive a sensing signal from a sensor (such as a signal from a millimeter wave radar, a signal from a LiDAR, or a video image from a camera), and create a traveling trajectory of the vehicle based on the sensing signal, for example, including information of current and adjacent lanes, and other vehicle information. The longitudinal acceleration control unit 41 can calculate an acceleration(such as a cruising velocity, an acceleration for vehicle following, and an acceleration for lane changing) based on the other vehicle information, the lane information, and the like. The vehicle control unit 42 can convert acceleration and deceleration signals output by the longitudinal acceleration control unit 41 into a torque required by the vehicle.

The control device of the present disclosure includes functions such as driver overriding (namely, master control by the driver), cruise control, following control, cornering assistance, cut-in/cut-out detection, overtaking assistance, and system warning. The driver overriding means that the driver can take over the vehicle at any time for overtaking. When the driver presses an accelerator pedal, an ACC system enters an overridden state and starts timing, and the driver overtakes or accelerates. After the driver completes the operation and releases the accelerator pedal, the ACC system takes over the vehicle again within a few minutes (usually 3 to 5 minutes). The cruise control means that when there is no target vehicle ahead, the vehicle travels at a target velocity set by the ACC system. The following control means that there is a target vehicle ahead, and the current vehicle follows the target vehicle to travel within a safe distance or stops based on a time headway. The cornering assistance means that when the vehicle experiences lateral acceleration and the target vehicle cannot be detected due to a sensor position and cornering of the target vehicle, a longitudinal acceleration is limited. The cut-in/cut-out detection means that when it is detected that a front vehicle on a current lane performs lane changing and cuts into an adjacent lane from the current lane, or that a vehicle on an adjacent lane cuts into a current lane, the ACC system dynamically controls an acceleration of the vehicle based on different scenarios. The overtaking assistance means that when the driver has an intention to overtake in different scenarios, the ACC system makes corresponding strategies to assist the vehicle in safely overtaking. The system warning means that the driver is alerted when it is predicted that the vehicle encounters a relevant danger.

In conclusion, the ACC device and method for a vehicle in the present disclosure can utilize a variable time gap calculation model to calculate a time headway in real time, know a change of the time headway in time, and further allow a prompt response to acceleration and deceleration of a front vehicle, thereby greatly shortening response time of a driver. This improves road utilization and reduce an occurrence rate of a traffic accident. A cornering strategy and an overtaking assistance strategy are introduced to assist a vehicle more reasonably and safely in passing through a bend, lane changing, or overtaking, such that an ACC system has richer functions, is applicable to a plurality of application scenarios, and can meet diverse needs of users. The technical scope of the present invention is not limited to the content of this specification and must be determined according to the scope of the claims.

## Claims

1. An adaptive cruise control (ACC) method for a vehicle, **characterized by** comprising following steps:

   S1. enabling an ACC function based on an operating signal of a driver, and after the ACC function is enabled, setting, by the driver, a cruising velocity in an ACC mode;
   S2. determining, by an ACC module, whether there is another vehicle in front of a current vehicle; and if there is no vehicle in front of the current vehicle, enabling the current vehicle to travel at the cruising velocity set by the driver; or if there is another vehicle, namely a front vehicle in front of the current vehicle, enabling, by the ACC module, a variable time gap calculation model to calculate a time headway $t_h$ between the current vehicle and the front vehicle in real time, and adjusting, by the ACC module, the cruising velocity of the current vehicle based on the time headway $t_h$ calculated in real time, wherein the variable time gap calculation model is as follows: $t_h = t_0 - C_v \times V_{rel} - C_{\partial} \times \alpha_p - C_j \times Jerk_p$, wherein $t_h$ represents the time headway calculated in real time, $t_0$ represents an initial time headway, $C_v$, $C_{\partial}$, and $C_j$ each represent a coefficient greater than 0, $V_{rel}$ represents a current relative velocity between the current vehicle and the front vehicle, $\alpha_p$ represents an acceleration of the front vehicle, and $Jerk_p$ represents a change rate of an acceleration of the current vehicle; when the current vehicle is accelerating or decelerating, the ACC module dynamically adjusts a value of the coefficient $C_j$ of the change rate of the acceleration of the current vehicle; and
   S3. when the current vehicle is cornering in the ACC mode, adjusting, by the ACC module, the cruising velocity of the current vehicle based on a cornering strategy;
   wherein the cornering strategy comprises:

   setting, by the ACC module, a maximum curvature radius $R_{max}$ for the cornering of the current vehicle;
   outputting, by the ACC module, a acceleration $a_w$ of the vehicle while driving a curve of the current vehicle through linear interpolation based on a relative distance and a relative velocity between the current vehicle and the front vehicle, and a curvature radius of a trajectory of the current vehicle;
   after the current vehicle enters a bend, calculating, by the ACC module, a traveling distance L and an average acceleration $a_{avg}$ of the current vehicle within M sampling cycles;

   if the curvature radius of the trajectory of the current vehicle is less than the maximum curvature radius $R_{max}$, determining whether there is another vehicle in front of the current vehicle; and if there is no vehicle ahead, controlling, by the ACC module, the current vehicle to travel the traveling distance L based on the acceleration $a_{avg}$; and
   after the travel, if the ACC module recognizes presence of another vehicle ahead, controlling, by the ACC module, the current vehicle to follow the another vehicle ahead to complete the cornering based on the acceleration $a_w$; if no vehicle appears in front of the current vehicle, controlling, by the ACC module, the current vehicle to complete the cornering at a maximum cruising velocity set in a case of no front vehicle during the cornering;
   wherein a calculation formula for the traveling distance L is as follows:

   $$L = \frac{\omega_{yaw} \times T}{R}$$, wherein $\omega_{yaw}$ represents

   a yaw velocity of the current vehicle, R represents the curvature radius of the vehicle, and T represents time within the M sampling cycles; and a calculation formula for the average value $a_{avg}$ is as follows:

   $$a_{avg} = \sum_{m=1}^{M} a_m \times 1/M$$, wherein

   $a_m$ represents an acceleration within an $m^{th}$ sampling cycle, m represents a sample cycle sequence, and m=1, 2, ..., M.

2. The adaptive cruise control method for the vehicle according to claim 1, **characterized in that** the acceleration of the front vehicle is calculated according to a following formula: $$\alpha_p = \frac{V_{ego} + V_{rel}}{\Delta t}$$, wherein $V_{ego}$ represents a current cruising velocity of the current vehicle, $\Delta t$ represents a time difference between a previous time point and a current time point; and the change rate of the acceleration of the current vehicle is calculated according to a following formula: $$Jerk_p = \frac{da}{dt}$$, wherein $a$ represents the acceleration of the current vehicle, and $t$ represents time.

3. The adaptive cruise control method for the vehicle according to claim 1, **characterized in that** in the step S2, the adjusting, by the ACC module, the cruising velocity of the current vehicle based on the time headway $t_h$ calculated in real time specifically comprises:

setting, by the ACC module, a maximum time headway threshold $t_{h\text{-max}}$ and a minimum time headway threshold $t_{h\text{-min}}$ for the current vehicle; calculating, by the variable time gap calculation model, a time headway $t_{h\text{-}i}$ at a current time point, and comparing the time headway $t_{h\text{-}i}$ with the maximum time headway threshold $t_{h\text{-max}}$ and the minimum time headway threshold $t_{h\text{-min}}$, wherein

if $t_{h\text{-}i} > t_{h\text{-max}}$, the ACC module adjusts a current time headway of the current vehicle to the $t_{h\text{-max}}$;
if $t_{h\text{-}i} < t_{h\text{-min}}$, the ACC module adjusts the current time headway of the current vehicle to the $t_{h\text{-min}}$; or
if $t_{h\text{-}i} \in [t_{h\text{-min}}, t_{h\text{-max}}]$, the ACC module adjusts the current time headway of the current vehicle to the $t_{h\text{-}i}$; and
adjusting, by the ACC module, a velocity of the current vehicle based on the current $t_{h\text{-max}}$, $t_{h\text{-min}}$, or $t_{h\text{-}i}$ of the current vehicle.

4. The adaptive cruise control method for the vehicle according to claim 3, **characterized in that**

when the ACC module finds that a value of the acceleration $\alpha_p$ of the front vehicle increases and is positive, it indicates that the front vehicle has an acceleration trend, the time headway $t_{h\text{-}i}$ calculated in real time by the variable time gap calculation model $t_h = t_0 - C_v \times V_{rel} - C_\partial \times \alpha_p - C_j \times Jerk_p$ is less than a time headway $t_{h\text{-}(i\text{-}1)}$ at a previous time point, and the ACC module increases the cruising velocity of the current vehicle to maintain a set spacing between the current vehicle and the front vehicle; and
when the ACC module finds that the value of the acceleration $\alpha_p$ of the front vehicle increases and is negative, it indicates that the front vehicle has a deceleration trend, the time headway $t_{h\text{-}i}$ calculated in real time by the variable time gap calculation model $t_h = t_0 - C_v \times V_{rel} - C_\partial \times \alpha_p - C_j \times Jerk_p$ is greater than the time headway $t_{h\text{-}(i\text{-}1)}$ at the previous time point, and the ACC module decreases the cruising velocity of the current vehicle to maintain the set spacing between the current vehicle and the front vehicle.

5. The adaptive cruise control method for the vehicle according to claim 1, **characterized by** further comprising: when the current vehicle is overtaking in the ACC mode, assisting, by the ACC module, the current vehicle in completing the overtaking based on an overtaking assistance strategy, wherein the overtaking assistance strategy comprises:

when the ACC module detects that there is the front vehicle in front of the current vehicle and a velocity of the front vehicle is lower than the cruising velocity of the current vehicle, recognizing, by the ACC module, whether there is a sensor signal;
if there is the sensor signal, determining whether information from another vehicle on an adjacent lane is detected based on the sensor signal; and
if the another vehicle is not detected or if the another vehicle is detected but located outside a safe lane changing distance, displaying, by the ACC module, a lane changing instruction through an instrument panel to remind the driver; or if the another vehicle is detected and located within the safe lane changing distance, reminding, by the ACC module, the driver that a lane changing requirement is not met; and
switching, by the driver, a turn signal lever after seeing the lane changing instruction, such that the ACC module first controls the current vehicle to accelerate forward, and then the driver performs a lane changing operation; and if the driver does not perform the lane changing operation within a time Y after the switching of the turn signal lever, disabling, by the ACC module, overtaking assistance, and controlling the current vehicle to maintain a safe distance from the front vehicle.

6. An adaptive cruise control (ACC) device for a vehicle, **characterized by** adopting the adaptive cruise control method for the vehicle according to any one of claims 1 to 5, and comprising:

a state machine (1) configured to control enabling/disabling of an ACC function and receive an operating signal of a driver;
a vehicle dynamics calculation module (2) configured to calculate a dynamics parameter of the vehicle;
a perception module (3) configured to perceive the dynamics parameter of the vehicle and road environment information; and
an ACC module (4) comprising a longitudinal acceleration control unit (41) and a vehicle control unit (42), wherein the longitudinal acceleration control unit (41) is configured to calculate a time headway $t_h$ between a current vehicle and a front vehicle, and information of an acceleration of the vehicle in real time based on a variable time gap calculation model; and the vehicle control unit (42) is configured to control the current vehicle to perform cruising, following, and cornering operations based on the information of the accelerated velocity.

## Patentansprüche

1. Verfahren zur adaptiven Geschwindigkeitsregelung (Adaptive Cruise Control, ACC) für ein Fahrzeug, **dadurch gekennzeichnet, dass** es folgende Schritte umfasst:

> S1: Aktivieren einer ACC-Funktion basierend auf einem Betätigungssignal eines Fahrers und Einstellen einer Fahrgeschwindigkeit in einem ACC-Modus durch den Fahrer nach der Aktivierung der ACC-Funktion;
> S2: Bestimmen durch ein ACC-Modul, ob sich ein anderes Fahrzeug vor einem aktuellen Fahrzeug befindet, und Aktivieren eines Fahrbetriebs des aktuellen Fahrzeugs mit der vom Fahrer eingestellten Fahrgeschwindigkeit, wenn sich kein Fahrzeug vor dem aktuellen Fahrzeug befindet, oder, wenn sich ein anderes Fahrzeug, nämlich ein vorderes Fahrzeug, vor dem aktuellen Fahrzeug befindet, Aktivieren eines variablen Modells zur Berechnung eines Zeitabstands durch das ACC-Modul, um einen Zeitabstand $t_h$ zwischen dem aktuellen Fahrzeug und dem vorderen Fahrzeug in Echtzeit zu berechnen, und Anpassen der Fahrgeschwindigkeit des aktuellen Fahrzeugs basierend auf dem in Echtzeit berechneten Zeitabstand $t_h$ durch das ACC-Modul,
> wobei das variable Modell zur Berechnung eines Zeitabstands wie folgt lautet: $t_h$ - $t_0$ - $C_v \times V_{rel}$ - $C_\partial \times \alpha_p$ - $C_j \times Jerk_p$, wobei $t_h$ den in Echtzeit berechneten Zeitabstand darstellt, $t_0$ einen initialen Zeitabstand darstellt, $C_v$, $C_\partial$ und $C_j$ jeweils einen Koeffizienten größer als 0 darstellen, $V_{rel}$ eine aktuelle Relativgeschwindigkeit zwischen dem aktuellen Fahrzeug und dem vorderen Fahrzeug darstellt, $\alpha_p$ eine Beschleunigung des vorderen Fahrzeugs darstellt und $Jerk_p$ eine Änderungsrate einer Beschleunigung des aktuellen Fahrzeugs darstellt, wobei das ACC-Modul ein Wert des Koeffizienten $C_j$ der Änderungsrate der Beschleunigung des aktuellen Fahrzeugs dynamisch anpasst, wenn das aktuelle Fahrzeug beschleunigt oder verzögert; und
> S3: Anpassen der Fahrgeschwindigkeit des aktuellen Fahrzeugs basierend auf einer Kurvenstrategie durch das ACC-Modul, wenn das aktuelle Fahrzeug im ACC-Modus eine Kurve fährt;
> wobei die Kurvenstrategie umfasst:
>
>> Einstellen eines maximalen Krümmungsradius $R_{max}$ für die Kurvenfahrt des aktuellen Fahrzeugs durch das ACC-Modul;
Ausgeben einer Beschleunigung $a_w$ des Fahrzeugs während der Fahrt des aktuellen Fahrzeugs durch eine Kurve mittels linearer Interpolation basierend auf einem relativen Abstand und einer Relativgeschwindigkeit zwischen dem aktuellen Fahrzeug und dem vorderen Fahrzeug, sowie eines Krümmungsradius einer Trajektorie des aktuellen Fahrzeugs durch das ACC-Modul;
Berechnen einer Fahrstrecke L und einer durchschnittlichen Beschleunigung $a_{avg}$ des aktuellen Fahrzeugs innerhalb von M Abtastzyklen durch das ACC-Modul, nachdem das aktuelle Fahrzeug in eine Kurve eingefahren ist;
Bestimmen, ob sich ein anderes Fahrzeug vor dem aktuellen Fahrzeug befindet, wenn der Krümmungsradius der Trajektorie des aktuellen Fahrzeugs kleiner als der maximale Krümmungsradius $R_{max}$ ist, und Steuern des aktuellen Fahrzeugs durch das ACC-Modul, um die Fahrstrecke L basierend auf der Beschleunigung $a_{avg}$ zurückzulegen, wenn kein vorausfahrendes Fahrzeug vorhanden ist; und,
wenn das ACC-Modul nach dem Zurücklegen die Anwesenheit eines anderen vorausfahrenden Fahrzeugs erkennt, Steuern des aktuellen Fahrzeugs durch das ACC-Modul, damit es dem anderen vorausfahrenden Fahrzeug folgt, um die Kurvenfahrt basierend auf der Beschleunigung $a_w$ abzuschließen; oder, wenn kein Fahrzeug vor dem aktuellen Fahrzeug erscheint, Steuern des aktuellen Fahrzeugs durch das ACC-Modul, damit es die Kurvenfahrt mit einer maximalen Fahrgeschwindigkeit abschließt, die für den Fall ohne vorderes Fahrzeug während der Kurvenfahrt eingestellt ist;
wobei eine Berechnungsformel für die Fahrstrecke L wie folgt lautet:

$$L = \frac{\omega_{yaw} \times T}{R}$$ , wobei $\omega_{yaw}$ die Gier-

geschwindigkeit des aktuellen Fahrzeugs, R den Krümmungsradius des Fahrzeugs und T die Zeit innerhalb der M Abtastzyklen darstellt; und wobei eine Berechnungsformel für den Durchschnittswert $a_{avg}$ wie folgt lautet: $$a_{avg} = \sum_{m=1}^{M} a_m \times 1/M$$ , wo-

bei $a_m$ eine Beschleunigung im m-ten Abtastzyklus und m den Index des Abtastzyklus darstellt, und wobei m = 1, 2, ..., M ist.

2. Verfahren zur adaptiven Geschwindigkeitsregelung für ein Fahrzeug nach Anspruch 1, **dadurch gekennzeichnet, dass** die Beschleunigung des vorderen Fahrzeugs nach folgender Formel berechnet wird:

$$\alpha_p = \frac{V_{ego} + V_{rel}}{\Delta t}$$

, wobei $V_{ego}$ eine aktuelle Fahrgeschwindigkeit des aktuellen Fahrzeugs und $\Delta t$ eine Zeitdifferenz zwischen einem vorherigen Zeitpunkt und einem aktuellen Zeitpunkt darstellt; und dass die Änderungsrate der Beschleunigung des aktuellen Fahrzeugs nach folgender Formel berechnet wird:

$$Jerk_p = \frac{da}{dt}$$

, wobei $a$ die Beschleunigung des aktuellen Fahrzeugs und $t$ die Zeit darstellt.

3. Verfahren zur adaptiven Geschwindigkeitsregelung für ein Fahrzeug nach Anspruch 1, **dadurch gekennzeichnet, dass** in Schritt S2 das Anpassen der Fahrgeschwindigkeit des aktuellen Fahrzeugs basierend auf dem in Echtzeit berechneten Zeitabstand $t_h$ durch das ACC-Modul insbesondere umfasst:

Einstellen eines maximalen Zeitabstandsschwellenwerts $t_{h\text{-max}}$ und eines minimalen Zeitabstandsschwellenwerts $t_{h\text{-min}}$ für das aktuelle Fahrzeug durch das ACC-Modul; Berechnen eines Zeitabstands $t_{h\text{-}i}$ zum aktuellen Zeitpunkt mittels des variablen Modells zur Berechnung eines Zeitabstands und Vergleichen des Zeitabstands $t_{h\text{-}i}$ mit dem maximalen Zeitabstandsschwellenwert $t_{h\text{-max}}$ und dem minimalen Zeitabstandsschwellenwert $t_{h\text{-min}}$, wobei
beim $t_{h\text{-}i} > t_{h\text{-max}}$ das ACC-Modul einen aktuellen Zeitabstand des aktuellen Fahrzeugs auf den $t_{h\text{-max}}$ anpasst;
beim $t_{h\text{-}i} < t_{h\text{-min}}$ das ACC-Modul den aktuellen Zeitabstand des aktuellen Fahrzeugs auf den $t_{h\text{-min}}$ anpasst; oder
beim $t_{h\text{-}i} \in [t_{h\text{-min}}, t_{h\text{-max}}]$ das ACC-Modul den aktuellen Zeitabstand des aktuellen Fahrzeugs auf den $t_{h\text{-}i}$ anpasst; und
Anpassen einer Geschwindigkeit des aktuellen Fahrzeugs durch das ACC-Modul basierend auf den aktuellen $t_{h\text{-max}}$, $t_{h\text{-min}}$, oder $t_{h\text{-}i}$ des aktuellen Fahrzeugs.

4. Verfahren zur adaptiven Geschwindigkeitsregelung für ein Fahrzeug nach Anspruch 3, **dadurch gekennzeichnet, dass**,

wenn das ACC-Modul feststellt, dass einen Wert der Beschleunigung $\alpha_p$ des vorderen Fahrzeugs ansteigt und positiv ist, dies anzeigt, dass das vordere Fahrzeug eine Beschleunigungstendenz aufweist, der Zeitabstand $t_{h\text{-}i}$ der mittels des variablen Modells zur Berechnung eines Zeitabstands $t_h = t_0 - C_v \times V_{rel} - C_\partial \times \alpha_p - C_j \times Jerk_p$ in Echtzeit berechnet wird, kleiner ist als ein Zeitabstand $t_{h\text{-}(i\text{-}1)}$ zu einem vorherigen Zeitpunkt, und durch das ACC-Modul die Fahrgeschwindigkeit des aktuellen Fahrzeugs erhöht wird, um einen eingestellten Abstand zwischen dem aktuellen Fahrzeug und dem vorderen Fahrzeug einzuhalten; und
wenn das ACC-Modul feststellt, dass der Wert der Beschleunigung $\alpha_p$ des vorderen Fahrzeugs ansteigt und negativ ist, dies anzeigt, dass das vordere Fahrzeug eine Verzögerungstendenz aufweist, der Zeitabstand $t_{h\text{-}i}$ der mittels des variablen Modells zur Berechnung eines Zeitabstands $t_h = t_0 - C_v \times V_{rel} - C_\partial \times \alpha_p - C_j \times Jerk_p$ in Echtzeit berechnet wird, größer ist als der Zeitabstand $t_{h\text{-}(i\text{-}1)}$ zum vorherigen Zeitpunkt, und durch das ACC-Modul die Fahrgeschwindigkeit des aktuellen Fahrzeugs verringert wird, um den eingestellten Abstand zwischen dem aktuellen Fahrzeug und dem vorderen Fahrzeug einzuhalten.

5. Verfahren zur adaptiven Geschwindigkeitsregelung für ein Fahrzeug nach Anspruch 1, **dadurch gekennzeichnet, dass** es ferner umfasst: Unterstützen, durch das ACC-Modul, des aktuellen Fahrzeugs beim Abschließen eines Überholvorgangs basierend auf einer Überholunterstützungsstrategie, wenn ein Überholvorgang des aktuellen Fahrzeugs im ACC-Modus durchgeführt wird, wobei die Überholunterstützungsstrategie umfasst:

Erkennen durch das ACC-Modul, ob ein Sensorsignal vorliegt, wenn das ACC-Modul erfasst, dass sich das vordere Fahrzeug vor dem aktuellen Fahrzeug befindet und dessen Geschwindigkeit niedriger ist als die Fahrgeschwindigkeit des aktuellen Fahrzeugs;
Bestimmen, ob Informationen vom anderen Fahrzeug auf einer benachbarten Fahrspur basierend auf dem Sensorsignal erfasst werden, wenn das Sensorsignal vorhanden ist; und, wenn das andere Fahrzeug nicht erfasst wird oder wenn das andere Fahrzeug erfasst wird, sich jedoch außerhalb eines sicheren Fahrspurwechselabstands befindet, Anzeigen einer Fahrspurwechselanweisung durch das ACC-Modul über ein Armaturenbrett, um den Fahrer daran zu erinnern; oder, wenn das andere Fahrzeug erfasst wird und sich innerhalb des sicheren Fahrspurwechselabstands befindet, Erinnern des Fahrers durch das ACC-Modul daran, dass eine Fahrspurwechselanforderung nicht erfüllt ist; und

Umschalten eines Blinkerhebels durch den Fahrer nach Erhalt der Fahrspurwechselanweisung, sodass das ACC-Modul zunächst das aktuelle Fahrzeug so steuert, dass es vorwärts beschleunigt, und der Fahrer anschließend einen Fahrspurwechselvorgang durchführt; und, wenn der Fahrer den Fahrspurwechselvorgang nicht innerhalb einer Zeit Y nach dem Umschalten des Blinkerhebels durchführt, Deaktivieren der Überholunterstützung durch das ACC-Modul und Steuern des aktuellen Fahrzeugs, um einen sicheren Abstand zum vorderen Fahrzeug einzuhalten.

6. Vorrichtung zur adaptiven Geschwindigkeitsregelung (Adaptive Cruise Control, ACC) für ein Fahrzeug, **gekennzeichnet durch** die Verwendung eines Verfahrens zur adaptiven Geschwindigkeitsregelung für das Fahrzeug gemäß einem der Ansprüche 1 bis 5, und umfassend:

eine Zustandsmaschine (1), die so konfiguriert ist, dass sie die Aktivierung/Deaktivierung einer ACC-Funktion steuert und ein Betriebssignal eines Fahrers empfängt;

ein Fahrzeugdynamik-Berechnungsmodul (2), das so konfiguriert ist, dass es einen Dynamikparameter des Fahrzeugs berechnet;

ein Wahrnehmungsmodul (3), das so konfiguriert ist, dass es den Dynamikparameter des Fahrzeugs und Informationen zur Straßenumgebung wahrnimmt; und

ein ACC-Modul (4), das eine Längsbeschleunigungs-Steuereinheit (41) und eine Fahrzeugsteuereinheit (42) umfasst, wobei die Längsbeschleunigungs-Steuereinheit (41) so konfiguriert ist, dass sie einen Zeitabstand $t_h$ zwischen einem aktuellen Fahrzeug und einem vorderen Fahrzeug sowie Informationen über eine Beschleunigung des Fahrzeugs in Echtzeit basierend auf einem variablen Modell zur Berechnung eines Zeitabstands berechnet, und wobei die Fahrzeugsteuereinheit (42) so konfiguriert ist, dass sie das aktuelle Fahrzeug so steuert, dass es basierend auf den Informationen über die Beschleunigung Fahrvorgänge, Folgevorgänge und Kurvenfahrvorgänge ausführt.

**Revendications**

1. Procédé de commande de croisière adaptatif (Adaptive Cruise Control, ACC) pour un véhicule, **carac-**

**térisé en ce qu'**il comprend les étapes suivantes :

S1. permettre une fonction ACC sur la base d'un signal d'opération d'un conducteur, et après que la fonction ACC est permise, définir, par le conducteur, une vélocité de croisière en mode ACC ;

S2. déterminer, par un module ACC, s'il y a un autre véhicule devant un véhicule actuel ; et s'il n'y a pas de véhicule devant le véhicule actuel, permettre au véhicule actuel de marcher à la vélocité de croisière définie par le conducteur ; ou s'il y a un autre véhicule, à savoir un véhicule précédant devant le véhicule actuel, permettre, par le module ACC, à un modèle de calcul d'intervalle de temps variable de calculer en temps réel un intervalle de temps entre véhicules $t_h$ entre le véhicule actuel et le véhicule précédant, et ajuster, par le module ACC, la vélocité de croisière du véhicule actuel sur la base de l'intervalle de temps entre véhicules $t_h$ calculé en temps réel,

dans lequel le modèle de calcul d'intervalle de temps variable est le suivant : $t_h = t_0 - C_v \times V_{rel} - C_\partial \times \alpha_p - C_j \times Jerk_p$, où $t_h$ représente l'intervalle de temps entre véhicules calculé en temps réel, $t_0$ représente un intervalle de temps entre véhicules initial, $C_v$, $C_\partial$, et $C_j$ représentent chacun un coefficient supérieur à 0, $V_{rel}$ représente une vélocité relative actuelle entre le véhicule actuel et le véhicule précédant, $\alpha_p$ représente une accélération du véhicule précédant, et $Jerk_p$ représente un taux de variation d'une accélération du véhicule actuel ; lorsque le véhicule actuel accélère ou décélère, le module ACC ajuste dynamiquement une valeur du coefficient $C_j$ du taux de variation de l'accélération du véhicule actuel ; et

S3. lorsque le véhicule actuel prend un virage en mode ACC, ajuster, par le module ACC, la vélocité de croisière du véhicule actuel sur la base d'une stratégie de virage ;

dans lequel la stratégie de virage comprend :

définir, par le module ACC, un rayon de courbure maximal $R_{max}$ pour le virage du véhicule actuel ;

fournir, par le module ACC, une accélération $a_w$ du véhicule lors de la conduite selon une courbe du véhicule actuel par l'interpolation linéaire sur la base d'une distance relative et d'une vélocité relative entre le véhicule actuel et le véhicule précédant, ainsi qu'un rayon de courbure d'une trajectoire du véhicule actuel ;

après que le véhicule actuel prend un virage, calculer, par le module ACC, une distance parcourue L et une accélération moyenne $a_{avg}$ du véhicule actuel pendant M cycles d'échantillonnage ;

si le rayon de courbure de la trajectoire du véhicule actuel est inférieur au rayon de courbure maximal $R_{max}$, déterminer s'il y a un autre véhicule devant le véhicule actuel ; et s'il n'y a pas de véhicule précédant, commander, par le module ACC, le véhicule actuel à parcourir la distance parcourue L sur la base de l'accélération $a_{avg}$ ; et après le parcours, si le module ACC reconnaît la présence d'un autre véhicule précédant, commander, par le module ACC, le véhicule actuel à suivre l'autre véhicule précédant pour compléter le virage sur la base de l'accélération $a_w$; si aucun véhicule n'apparaît devant le véhicule actuel, commander, par le module ACC, le véhicule actuel à compléter le virage à une vélocité de croisière maximale définie en cas d'absence de véhicule précédant pendant le virage ;

dans lequel une formule de calcul pour la distance parcourue L est la suivante :

$$L = \frac{\omega_{yaw} \times T}{R}$$

, où $\omega_{yaw}$ représente une vélocité de lacet du véhicule actuel, R représente le rayon de courbure du véhicule, et T représente le temps pendant les M cycles d'échantillonnage ; et une formule de calcul pour la valeur moyenne $a_{avg}$ est la suivante :

$$a_{avg} = \sum_{m=1}^{M} a_m \text{ x } 1/M$$

, où $a_m$ représente une accélération pendant un m-ème cycle d'échantillonnage, m représente une séquence de cycles d'échantillonnage, et m=1, 2, ..., M.

**2.** Procédé de commande de croisière adaptatif pour le véhicule selon la revendication 1, **caractérisée en ce que** l'accélération du véhicule précédant est calculée selon la formule suivante :

$$\alpha_p = \frac{V_{ego} + V_{rel}}{\Delta t}$$

, où $V_{ego}$ représente une vélocité de croisière actuelle du véhicule actuel, $\Delta t$ représente une différence de temps entre un point de temps précédent et un point de temps actuel ; et le taux de variation de l'accélération du véhicule actuel est calculé selon la formule suivante :

$$Jerk_p = \frac{da}{dt}$$

, où $a$ représente l'accélération du véhicule actuel, et $t$ représente le temps.

**3.** Procédé de commande de croisière adaptatif pour le véhicule selon la revendication 1, **caractérisé en ce que**, à l'étape S2, l'ajustement, par le module ACC, de la vélocité de croisière du véhicule actuel sur la base de l'intervalle de temps entre véhicules $t_h$ calculé en temps réel comprend en particulier :

définir, par le module ACC, un seuil maximal d'intervalle de temps entre véhicules $t_{h\text{-max}}$ et un seuil minimal d'intervalle de temps entre véhicules $t_{h\text{-min}}$ pour le véhicule actuel ;

calculer, par le modèle de calcul d'intervalle de temps variable, un intervalle de temps entre véhicules $t_{h\text{-}i}$ à un point de temps actuel, et comparer l'intervalle de temps entre véhicules $t_{h\text{-}i}$ avec le seuil maximal d'intervalle de temps entre véhicules $t_{h\text{-max}}$ et le seuil minimal d'intervalle de temps entre véhicules $t_{h\text{-min}}$, dans lequel

si $t_{h\text{-}i} > t_{h\text{-max}}$, le module ACC ajuste un intervalle de temps entre véhicules actuel du véhicule actuel à $t_{h\text{-max}}$;

si $t_{h\text{-}i} < t_{h\text{-min}}$, le module ACC ajuste l'intervalle de temps entre véhicules actuel du véhicule actuel à $t_{h\text{-min}}$; ou

si $t_{h\text{-}i} \in [t_{h\text{-min}}, t_{h\text{-max}}]$, le module ACC ajuste l'intervalle de temps entre véhicules actuel du véhicule actuel à $t_{h\text{-}i}$; et

ajuster, par le module ACC, une vélocité du véhicule actuel sur la base de $t_{h\text{-max}}$, $t_{h\text{-min}}$, ou $t_{h\text{-}i}$ actuel du véhicule actuel.

**4.** Procédé de commande de croisière adaptatif pour le véhicule selon la revendication 3, **caractérisé en ce que**,

lorsque le module ACC constate qu'une valeur de l'accélération $\alpha_p$ du véhicule précédant augmente et est positive, il indique que le véhicule précédant a une tendance à l'accélération, l'intervalle de temps entre véhicules $t_{h\text{-}i}$ calculé en temps réel par le modèle de calcul d'intervalle de temps variable $t_h = t_0 - C_v \times V_{rel} - C_\partial \times \alpha_p - C_j \times Jerk_p$ est inférieur à un intervalle de temps entre véhicules $t_{h\text{-}(i\text{-}1)}$ à un point de temps précédent, et le module ACC augmente la vélocité de croisière du véhicule actuel pour maintenir un espace défini entre le véhicule actuel et le véhicule précédant ; et

lorsque le module ACC constate que la valeur de l'accélération $\alpha_p$ du véhicule précédant réduit et est négative, il indique que le véhicule précédant a une tendance à la décélération, l'intervalle de temps entre véhicules $t_{h-i}$ calculé en temps réel par le modèle de calcul d'intervalle de temps variable $t_h = t_0 - C_v \times V_{rel} - C_\partial \times \alpha_p - C_j \times Jerk_p$ est supérieur à l'intervalle de temps entre véhicules $t_{h-(i-1)}$ au point de temps précédent, et le module ACC réduit la vélocité de croisière du véhicule actuel pour maintenir l'espace défini entre le véhicule actuel et le véhicule précédant.

5.  Procédé de commande de croisière adaptatif pour le véhicule selon la revendication 1, **caractérisé en ce qu'**il comprend en outre : lorsque le véhicule actuel dépasse en mode ACC, assister, par le module ACC, le véhicule actuel de compléter le dépassement sur la base d'une stratégie d'assistance au dépassement, dans lequel la stratégie d'assistance au dépassement comprenant :

    lorsque le module ACC détecte qu'il y a un véhicule précédant devant le véhicule actuel et qu'une vélocité du véhicule précédant est inférieure à la vélocité de croisière du véhicule actuel, reconnaître, par le module ACC, s'il y a un signal de capteur ;
    s'il y a le signal de capteur, déterminer si des informations provenant d'un autre véhicule sur une voie adjacente sont détectées sur la base du signal du capteur ; et si l'autre véhicule n'est pas détecté ou si l'autre véhicule est détecté mais situé en dehors d'une distance de sécurité de changement de voie, afficher, par le module ACC, une instruction de changement de voie à travers un tableau de bord pour rappeler au conducteur ; ou si l'autre véhicule est détecté et situé dans la distance de sécurité de changement de voie, rappeler, par le module ACC, au conducteur qu'une condition de changement de voie n'est pas remplie ; et
    actionner, par le conducteur, un levier de clignotant après avoir vu l'instruction de changement de voie, de sorte que le module ACC commande d'abord le véhicule actuel à accélérer vers l'avant, puis le conducteur effectue une opération de changement de voie ; et si le conducteur ne réalise pas l'opération de changement de voie dans un délai Y après l'action sur le levier de clignotant, interdire, par le module ACC, l'assistance au dépassement, et commander le véhicule actuel à maintenir une distance de sécurité par rapport au véhicule précédant.

6.  Dispositif de commande de croisière adaptatif (Adaptive Cruise Control, ACC) pour un véhicule, **caractérisé en ce qu'**il utilise le procédé de commande de croisière adaptatif pour le véhicule selon l'une quelconque des revendications 1 à 5 et comprend :

une machine à états (1) configurée pour commander permission/interdiction d'une fonction ACC et recevoir un signal d'opération depuis un conducteur ;
un module de calcul de dynamique de véhicule (2) configuré pour calculer un paramètre dynamique du véhicule ;
un module de perception (3) configuré pour percevoir le paramètre dynamique du véhicule et des informations sur l'environnement routier ; et
un module ACC (4) comprenant une unité de commande d'accélération longitudinale (41) et une unité de commande de véhicule (42), dans lequel l'unité de commande d'accélération longitudinale (41) est configurée pour calculer un intervalle de temps entre véhicules $t_h$ entre un véhicule actuel et un véhicule précédent, ainsi que des informations sur une accélération du véhicule en temps réel sur la base d'un modèle de calcul d'intervalle de temps variable ; et l'unité de commande de véhicule (42) est configurée pour commander le véhicule actuel à effectuer des opérations de croisière, de suivi et de virage sur la base des informations sur l'accélération.

Enable an ACC function based on an operating signal of a driver, and after the ACC function is enabled, set, by the driver, a cruising velocity in an ACC mode

S1

Determine, by an ACC module, whether there is another vehicle in front of a current vehicle; and if there is no vehicle in front of the current vehicle, enable the current vehicle to travel at the set cruising velocity; or if there is another vehicle in front of the current vehicle, enable, by the ACC module, a variable time gap calculation model to calculate a time headway $t_h$ between the current vehicle and the front vehicle in real time, and adjust, by the ACC module, the cruising velocity of the current vehicle based on the real-time time headway $t_h$

S2

When the current vehicle is cornering in the ACC mode, adjust, by the ACC module, the cruising velocity of the current vehicle based on a cornering strategy

S3

**FIG. 1**

A variable time gap calculation model calculates a time headway in real time

Is $t_{h-i}$ greater than $t_{h-(i-1)}$?

Yes

Decrease a cruising velocity of a current vehicle

Is $t_{h-i}$ equal to $t_{h-(i-1)}$?

Yes

Maintain the cruising velocity of the current vehicle

Is $t_{h-i}$ less than $t_{h-(i-1)}$?

Yes

Increase the cruising velocity of the current vehicle

**FIG. 2**

Set a maximum curvature radius $R_{max}$ for cornering of a current vehicle

An ACC module outputs a cornering-specific accelerated velocity $a_w$

The ACC module calculates an average accelerated velocity $a_{avg}$ within M sampling cycles

Is a curvature radius of the current vehicle less than the maximum curvature radius $R_{max}$?

Yes

Is there another vehicle in front of the current vehicle?

Yes

The ACC module controls the current vehicle to follow a front vehicle to complete cornering based on the accelerated velocity $a_w$

No

The ACC module controls the current vehicle to travel a distance L based on the accelerated velocity $a_{avg}$

Yes

Is there another vehicle in front of the current vehicle?

No

The ACC module controls the current vehicle to complete cornering based on a maximum cruising velocity specified in the case of no front vehicle

**FIG. 3**

There is another vehicle ahead and a velocity of the front vehicle is less than a cruising velocity of a current vehicle

An ACC module recognizes whether there is a sensor signal

Yes

Is information of another vehicle on an adjacent lane detected based on the sensor signal?

Yes

Is the another vehicle located outside a safe lane changing distance?

No

Yes

No

The ACC module displays a lane changing instruction through an instrument panel to remind a driver

The ACC module reminds a driver that a lane changing requirement is not met

The driver switches a turn signal lever for lane changing and overtaking

Does the driver not perform lane changing within a time Y after switching the turn signal lever?

Yes

The ACC module disables overtaking assistance and controls the current vehicle to maintain a safe distance from the front vehicle

**FIG. 4**

**FIG. 5**

**FIG. 6**

Change rate of a decelerated velocity (m/s$^3$)

FIG. 7

**FIG. 8**

**EP 4 446 188 B1**

**Patent documents cited in the description**

- US 9043115 B2